# EUROPEAN PATENT SPECIFICATION

(11) **EP 3 974 092 B1**
(45) Date of publication and mention of the grant of the patent: **17.04.2024**
(21) Application number: 20810167.5
(22) Date of filing: 21.05.2020
(51) Int. Cl.: B23K 9/073, B23K 9/09, B23K 9/095, B23K 9/12, B23K 9/173

(54) **ARC WELDING METHOD**
LICHTBOGENSCHWEISSVERFAHREN
PROCÉDÉ DE SOUDAGE À L'ARC

(30) Priority: 22.05.2019 JP 2019096032
(43) Date of publication of application: 30.03.2022
(60) Divisional application: 24156013.5
(73) Proprietor: Panasonic Intellectual Property Management Co., Ltd., Osaka-shi, Osaka 540-6207 (JP)
(72) Inventor: MATSUOKA, Noriyuki, Osaka-shi, Osaka 540-6207 (JP); SATOU, Shun, Osaka-shi, Osaka 540-6207 (JP); KOWA, Masaru, Osaka-shi, Osaka 540-6207 (JP); NAKAGAWA, Akira, Osaka-shi, Osaka 540-6207 (JP); FUJIWARA, Junji, Osaka-shi, Osaka 540-6207 (JP)
(74) Representative: Vigand, Philippe
(86) International application number: PCT/JP2020/020066
(87) International publication number: WO 2020/235620

(56) References cited:
- EP-A1- 1 886 756
- EP-A1- 1 985 400
- EP-A1- 2 716 395
- EP-A1- 3 020 498
- WO-A1-2006/129388
- WO-A1-2018/079345
- WO-A2-2014/140759
- JP-A- 2012 081 501
- JP-A- 2012 081 501

## Description

### TECHNICAL FIELD

The technique disclosed herein relates to an arc welding technique.

### BACKGROUND ART

The document EP3020498A1 discloses arc welding method and the document JP2012081501A discloses "arc welding control method, and arc welding equipment". PTL 1 discloses a method for controlling pulsed-arc welding for supplying a welding current repeatedly including a peak current and a base current in a pulse form between a welding wire and a welding base material. This method for controlling pulsed-arc welding increases the welding current when a short-circuit between the welding wire and the welding base material is detected. During the short-circuit, a droplet is generated between the welding wire and the welding base material. Immediately before opening of the short-circuit, a constricted portion is generated in the droplet. The above method reduces the welding current when the constricted portion of the droplet is detected.

### Citation List

### Patent Literature

PTL 1: International Publication No. 2006/129388 A

### SUMMARY OF THE INVENTION

### Technical problem

It is difficult for arc welding as in PTL 1 to maintain a constant cycle of a welding current (a period from a start point of a peak current to an end point of a base current following the peak current). For example, when a short-circuit occurs between the welding wire and the base material, control for periodically changing the welding current is interrupted from a start of the short-circuit to opening of the short-circuit. That is, time (short-circuit time) from the start of the short-circuit to the opening of the short-circuit is added to the cycle of the welding current. This causes the cycle of the welding current to be unstable. As a result, bead appearance may be deteriorated.

Thus, an object of the technique disclosed herein is to provide an arc welding technique capable of preventing instability of a cycle of a welding current due to a short-circuit between a welding wire and a base material. Solution to problem

The invention is as set out in the independent claims, further aspects of the invention are outlined in the dependent claims. Embodiments that do not fall within the scope of the claims do not describe part of the invention. A technique disclosed herein relates to an arc welding method in which a welding wire serving as a consumable electrode is fed toward a base material, and a welding current in a pulse form alternately including a peak current and a base current smaller than the peak current is caused to flow through the welding wire and the base material to generate an arc between the welding wire and the base material to weld the base material. The arc welding method includes the steps of: a) detecting a short-circuit between the welding wire and the base material; and b) changing a feeding speed of the welding wire from a first feeding speed to a second feeding speed on a negative side from the first feeding speed when a speed in a direction in which the welding wire is fed toward the base material is defined as positive after the short-circuit between the welding wire and the base material is detected in the step a).

The technique disclosed herein also relates to an arc welding device in which a welding wire serving as a consumable electrode is fed toward a base material by a wire feeder, and a welding current in a pulse form alternately including a peak current and a base current smaller than the peak current is caused to flow through the welding wire and the base material to generate an arc between the welding wire and the base material to weld the base material. The arc welding device includes: a power converter that causes the welding current to flow through the welding wire and the base material; and a controller that controls the wire feeder to change a feeding speed of the welding wire from a first feeding speed to a second feeding speed on a negative side when a speed in a direction in which the welding wire is fed toward the base material is defined as positive after detecting a short-circuit between the welding wire and the base material.

### Advantageous effect of invention

The technique disclosed herein enables preventing instability of a cycle of the welding current caused by the short-circuit between the welding wire and the base material.

### BRIEF DESCRIPTION OF DRAWINGS

FIG. 1 is a diagram illustrating a configuration of an arc welding device according to an exemplary embodiment.
FIG. 2 is a timing chart for illustrating operation of the arc welding device of the exemplary embodiment.
FIG. 3 is a timing chart for illustrating operation of an arc welding device according to a modification of the exemplary embodiment.
FIG. 4 is a diagram illustrating short-circuit standby time in accordance with a kind of material constituting a welding wire and feeding speed Wf of the welding wire.
FIG. 5 is a timing chart for illustrating operation of an arc welding device according to a modification of the exemplary embodiment.

### DESCRIPTION OF EMBODIMENT

Hereinafter, an exemplary embodiment will be described in detail with reference to the drawings. The same or equivalent portion in the drawings is designated by same reference numeral to eliminate duplicated description.

### (Arc welding system)

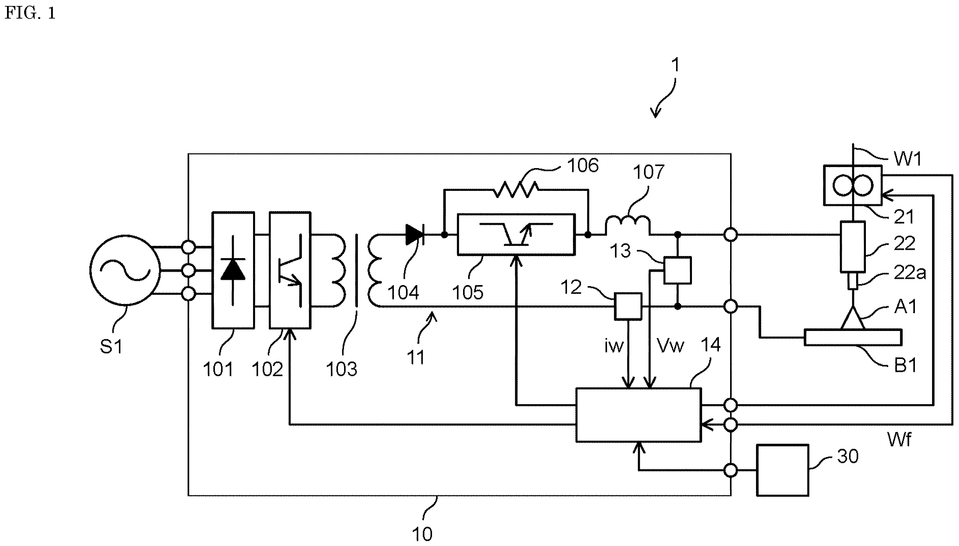

FIG. 1 illustrates a configuration of arc welding system 1 according to the exemplary embodiment. Arc welding system 1 is configured to generate arc A1 between welding wire W1 serving as a consumable electrode and base material B1 to weld base material B1. In this example, arc welding system 1 includes arc welding device 10, wire feeder 21, welding torch 22, and setting unit 30.

### (Wire feeder and welding torch)

Wire feeder 21 feeds welding wire W1 to welding torch 22. Welding torch 22 holds welding wire W1 such that welding wire W1 fed from wire feeder 21 and base material B1 face each other. Welding torch 22 is provided with welding tip 22a for supplying power from arc welding device 10 to welding wire W1. Wire feeder 21 is provided with a feeding speed detector (not illustrated) that detects feeding speed Wf of welding wire W1. Welding torch 22 is held by a robot (not illustrated). Feeding speed Wf (specifically, a detection signal indicating feeding speed Wf) of welding wire W1 detected by the feeding speed detector is transmitted to controller 14 described later. The robot moves welding torch 22 at a predetermined welding speed along a welding target region predetermined in base material B1.

### (Setting unit)

Setting unit 30 is used for setting welding conditions.

### (Arc welding device)

Arc welding device 10 causes welding current "iw" suitable for welding to flow through welding wire W1 and base material B1 to generate arc A1 between welding wire W1 and base material B1 to weld base material B1. In this example, arc welding device 10 constitutes a DC pulse arc welding machine of a consumable electrode type. Welding current "iw" is a current in a pulse form, and alternately includes peak current "ip" and base current "ib". Specifically, arc welding device 10 includes power converter 11, welding current detector 12, welding voltage detector 13, and controller 14.

### [Power converter]

Power converter 11 is electrically connected to power source S1, and generates welding voltage Vw suitable for welding by using power supplied from power source S1. Power converter 11 is also electrically connected to welding wire W1 using welding tip 22a of welding torch 22, and is electrically connected to base material B1. Power converter 11 then applies welding voltage Vw across welding wire W1 and base material B1 to cause welding current "iw" to flow through welding wire W1 and base material B1.

In this example, power converter 11 includes first rectifier 101, first switching unit 102, transformer 103, second rectifier 104, second switching unit 105, resistor 106, and reactor 107. First rectifier 101 rectifies output of power source S1. First switching unit 102 adjusts output of first rectifier 101 by switching operation. Transformer 103 converts output of first switching unit 102 into output suitable for welding. Second rectifier 104 rectifies output of transformer 103. Second switching unit 105 adjusts output of second rectifier 104 by switching operation. Resistor 106 is connected in parallel with second switching unit 105. Reactor 107 is connected in series with second switching unit 105 and smooths output of second switching unit 105. Output of reactor 107 is supplied to welding wire W1 and base material B1 through welding tip 22a of welding torch 22. This causes welding voltage Vw to be applied across welding wire W1 and base material B1, and thus causing welding current "iw" to flow through welding wire W1 and base material B1.

### [Detector]

Welding current detector 12 detects welding current "iw". Welding voltage detector 13 detects welding voltage Vw. Welding current "iw" detected by welding current detector 12 (specifically, a detection signal indicating welding current "iw") and welding voltage Vw detected by welding voltage detector 13 (specifically, a detection signal indicating welding voltage Vw) are transmitted to controller 14.

### [Controller]

Controller 14 transmits a signal between each unit of arc welding device 10 (in this example, first switching unit 102, second switching unit 105, welding current detector 12, and welding voltage detector 13) and a device outside arc welding device 10 (in this example, wire feeder 21 and setting unit 30). Controller 14 controls each unit of arc welding device 10 and the device outside arc welding device 10 based on signals transmitted from each unit of arc welding device 10 and the device outside arc welding device 10. In this example, controller 14 controls first switching unit 102 and second switching unit 105 of arc welding device 10, wire feeder 21, and the robot (not illustrated) that holds welding torch 22. For example, controller 14 includes a processor and a memory that is electrically connected to the processor and stores a program and information for operating the processor.

### [Detection operation]

Next, detection operation of controller 14 will be described. Controller 14 performs operation of detecting a short-circuit, operation of detecting a constriction, and operation of detecting short-circuit opening.

### <Operation of detecting short-circuit (step of detecting short-circuit)>

In the operation of detecting a short-circuit, controller 14 detects a short-circuit between welding wire W1 and base material B1. Specifically, when welding voltage Vw detected by welding voltage detector 13 falls below a predetermined short-circuit occurrence threshold, controller 14 determines that a short-circuit has occurred between welding wire W1 and base material B1. The short-circuit occurrence threshold is set to welding voltage Vw at which it can be considered that a short-circuit occurs between welding wire W1 and base material B1.

### <Operation of detecting constriction (step of detecting constriction)>

In the operation of detecting a constriction, controller 14 detects a constriction having occurred in a droplet formed between welding wire W1 and base material B 1. Specifically, when a variation of welding voltage Vw per unit time detected by welding voltage detector 13 exceeds a predetermined constriction threshold, controller 14 determines that a constriction occurs in the droplet formed between welding wire W1 and base material B1. The constriction threshold is set to a variation of welding voltage Vw per unit time at which it can be considered that a constriction occurs in a droplet formed between welding wire W1 and base material B1.

### <Operation of detecting short-circuit opening (step of detecting short-circuit opening)>

In the operation of detecting short-circuit opening, controller 14 detects opening of a short-circuit between welding wire W1 and base material B1. Specifically, when welding voltage Vw detected by welding voltage detector 13 exceeds a predetermined short-circuit opening threshold, controller 14 determines that the short-circuit between welding wire W1 and base material B1 is opened. The short-circuit opening threshold is set to welding voltage Vw at which it can be considered that the short-circuit between welding wire W1 and base material B1 is opened.

### [Current control]

Controller 14 controls operation of power converter 11 (specifically, operation of first switching unit 102 and second switching unit 105) to control welding current "iw". In this example, controller 14 selectively performs normal current control and short-circuit current control. Controller 14 performs return control as necessary when control is returned to the normal current control from the short-circuit current control.

### <Normal current control>

The normal current control is performed during a period in which a short-circuit between welding wire W1 and base material B1 does not occur. In the normal current control, controller 14 controls welding current "iw" by bringing second switching unit 105 into a conductive state, and controlling switching operation of first switching unit 102 such that welding current "iw" alternately changes between peak current "ip" and base current "ib". In the normal current control, welding current "iw" has a frequency (output timing of peak current "ip" and base current "ib") that corresponds to a predetermined frequency (output timing).

### <Short-circuit current control>

After a short-circuit between welding wire W1 and base material B 1 is detected in the normal current control, controller 14 terminates the normal current control and starts the short-circuit current control. For example, controller 14 may start the short-circuit current control upon the detection of the short-circuit between welding wire W1 and base material B1. Controller 14 measures elapsed time from a time point at which the short-circuit between welding wire W1 and base material B1 is detected. In the short-circuit current control of this example, short-circuit initial control, current increase control, and current reduction control are performed.

### <<Short-circuit initial control>>

After (immediately after in this example) the short-circuit between welding wire W1 and base material B1 is detected in the normal current control, controller 14 starts short-circuit initial control. In the short-circuit initial control, controller 14 controls welding current "iw" by controlling operation of power converter 11 (specifically, switching operation of first switching unit 102) such that welding current "iw" becomes short-circuit initial current "is" that is predetermined. In the short-circuit initial control, second switching unit 105 is continuously maintained in the conductive state.

### <<Current increase control (step of increasing current)>>

After (immediately after in this example) a predetermined short-circuit standby time elapses from a time point at which the short-circuit between welding wire W1 and base material B1 is detected (i.e., a time point at which the short-circuit initial control is started), controller 14 terminates the short-circuit initial control and starts the current increase control. For example, controller 14 may start the current increase control upon the elapse of the short-circuit standby time. In the current increase control, controller 14 controls welding current "iw" by controlling operation of power converter 11 (specifically, switching operation of first switching unit 102) such that welding current "iw" increases at a predetermined rate of current increase. In the short-circuit initial control, second switching unit 105 is continuously maintained in the conductive state. The short-circuit standby time is preferably set to, for example, 100 psec or more and 3000 psec or less. Setting of the short-circuit standby time will be described later in detail.

### <<Current reduction control (step of reducing current)>>

After (immediately after in this example) the current increase control is started and then a constriction having occurred in a droplet formed between welding wire W1 and base material B1 is detected, controller 14 terminates the current increase control and starts the current reduction control. For example, controller 14 may start the current reduction control upon the detection of the constriction. In the current reduction control, controller 14 controls welding current "iw" by controlling operation of power converter 11 such that welding current "iw" sharply decreases. Specifically, controller 14 sharply reduces welding current "iw" by switching second switching unit 105 from the conductive state to an interrupted state.

### <Return control>

After (immediately after in this example) the short-circuit current control is started and opening of the short-circuit between welding wire W1 and base material B1 is detected, controller 14 terminates the short-circuit current control and performs the return control as necessary, and then starts the normal current control. For example, controller 14 may start the return control upon the detection of the opening of the short-circuit between welding wire W1 and base material B1. The return control is performed to form a molten mass (droplet) for next droplet transfer. In the return control, controller 14 controls welding current "iw" by controlling operation of power converter 11 (specifically, switching operation of first switching unit 102) such that welding current "iw" becomes a predetermined current. In the return control, second switching unit 105 is continuously maintained in the conductive state.

### [Feeding speed control]

Controller 14 controls operation of wire feeder 21 to control feeding speed Wf of welding wire W1. In this example, controller 14 performs feeding speed change control and feeding speed return control.

### <Feeding speed change control (step of changing feeding speed)>

Controller 14 performs the feeding speed change control after the short-circuit between welding wire W1 and base material B1 is detected in the normal current control. In this example, controller 14 performs the feeding speed change control after the current increase control is started in the short-circuit current control (specifically, at the same time as the start of the current increase control). For example, controller 14 may start the current increase control upon the elapse of the short-circuit standby time. In the feeding speed change control, controller 14 controls feeding speed Wf of welding wire W1 by controlling wire feeder 21 such that feeding speed Wf of welding wire W1 changes from first feeding speed Wf1 to second feeding speed Wf2.

First feeding speed Wf1 has a positive value when a speed of welding wire W1 in a direction toward base material B1 is defined as positive. That is, when feeding speed Wf of welding wire W1 is set to first feeding speed Wf1, welding wire W1 is fed in a forward feeding direction that is the direction toward base material B1.

Second feeding speed Wf2 is a feeding speed that is on a negative side from first feeding speed Wf1 when the speed in the direction toward base material B1 is defined as positive. When second feeding speed Wf2 has a positive value (a positive value smaller than first feeding speed Wf1) and feeding speed Wf of welding wire W1 is set to second feeding speed Wf2, welding wire W1 supplied in the forward feeding direction is decelerated. When second feeding speed Wf2 is zero and feeding speed Wf of welding wire W1 is set to second feeding speed Wf2, feeding of welding wire W1 is stopped. When second feeding speed Wf2 has a negative value and feeding speed Wf of welding wire W1 is set to second feeding speed Wf2, welding wire W1 is returned in a reverse feeding direction (a reverse direction of the forward feeding direction) away from base material B1.

### <Feeding speed return control (step of returning feeding speed)>

Controller 14 performs the feeding speed return control after (immediately after in this example) the opening of the short-circuit between welding wire W1 and base material B1 is detected in the short-circuit current control. For example, controller 14 may start the feeding speed return control upon the detection of the opening of the short-circuit between welding wire W1 and base material B1. In the feeding speed return control, controller 14 controls feeding speed Wf of welding wire W1 by controlling wire feeder 21 such that feeding speed Wf of welding wire W1 changes from second feeding speed Wf2 to first feeding speed Wf1.

### [Welding speed control]

Controller 14 also controls movement speed of welding torch 22 (i.e., welding speed) by controlling operation of the robot (not illustrated) that holds welding torch 22.

### [Operation of arc welding device (arc welding method)]

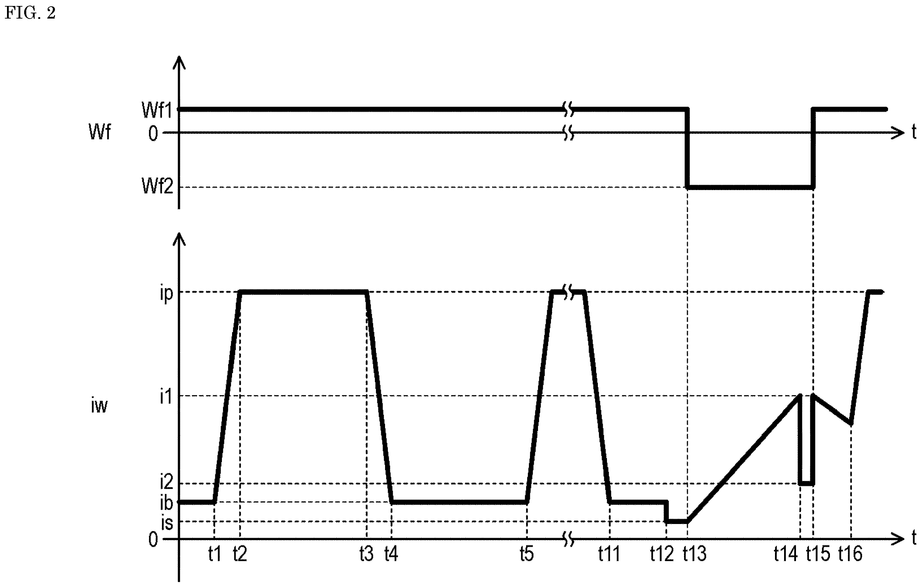

Next, operation of arc welding device 10 according to the exemplary embodiment will be described with reference to FIG. 2. In the example of FIG. 2, a short-circuit between welding wire W1 and base material B1 is detected at time point t12. At time point t14, a constriction having occurred in a droplet formed between welding wire W1 and base material B1 is detected. At time point t15, the opening of the short-circuit between welding wire W1 and base material B1 is detected. Time point t13 is a time point after the short-circuit standby time elapses from time point t12. That is, a period from time point t12 to time point t13 has a time length corresponding to the short-circuit standby time.

During a period from time point t1 to time point t5, the normal current control is continued. Welding current "iw" gradually increases from base current "ib" toward peak current "ip" in a period from time point t1 to time point t2, and is maintained at peak current "ip" in a period from time point t2 to time point t3. Then, welding current "iw" gradually decreases from peak current "ip" toward base current "ib" in a period from time point t3 to time point t4, and is maintained at base current "ib" in a period from time point t4 to time point t5.

During a period from time point t11 to time point t12, the normal current control is continued. When the short-circuit between welding wire W1 and base material B1 is detected at time point t12, the normal current control is terminated and the short-circuit initial control is started. This causes welding current "iw" to become short-circuit initial current "is". Then, the short-circuit initial control is continued in the period from time point t12 to time point t13 (time point after elapse of the short-circuit standby time from time point t12). This causes welding current "iw" to be maintained at short-circuit initial current "is" during the period from time point t12 to time point t13. Short-circuit initial current "is" may be lower than base current "ib", or may be the same as base current "ib".

At time point t13 (when the short-circuit standby time elapses from time point t12), the short-circuit initial control is terminated and the current increase control is started, and the current increase control is continued in a period from time point t13 to time point t14. This causes welding current "iw" to gradually increase from short-circuit initial current "is" at the predetermined rate of current increase.

When the current increase control is started at time point t13, the feeding speed change control is performed, and feeding speed Wf of welding wire W1 is switched from first feeding speed Wf1 to second feeding speed Wf2. Second feeding speed Wf2 may be maintained until the feeding speed return control is performed after the feeding speed change control has been performed. Second feeding speed Wf2 may be temporally constant or may temporally change.

When a constriction having occurred in a droplet formed between welding wire W1 and base material B1 is detected at time point t14, the current increase control is terminated, and the current reduction control is started. This causes welding current "iw" to sharply decrease from first current i1 toward second current i2 (current lower than first current i1) at time point t14. Then, the current reduction control is continued during a period from time point t14 to time point t15. This causes welding current "iw" to be maintained at second current i2 during the period from time point t14 to time point t15. Second current i2, which is a lower limit of welding current "iw" in the current reduction control, may be higher than base current "ib", may be the same as base current "ib", or may be lower than base current "ib".

When the opening of the short-circuit between welding wire W1 and base material B1 is detected at time point t15, the current reduction control is terminated and the return control is started, and the return control is continued during a period from time point t15 to time point t16. This causes a molten mass for next droplet transfer to be formed.

When the opening of the short-circuit between welding wire W1 and base material B1 is detected at time point t15, the feeding speed return control is also performed, and feeding speed Wf of welding wire W1 is switched from second feeding speed Wf2 to first feeding speed Wf1. First feeding speed Wf1 may be maintained until the feeding speed change control is performed after the feeding speed return control has been performed. First feeding speed Wf1 may be temporally constant or may temporally change.

At time point t16, the return control is terminated, and the normal current control is started. This causes welding current "iw" to gradually increase toward peak current "ip". Output timing of peak current "ip" after time point t16 (timing at which welding current "iw" becomes peak current "ip") corresponds to a predetermined frequency of welding current "iw".

### [Effects of exemplary embodiment]

As described above, after the short-circuit between welding wire W1 and base material B1 is detected, feeding speed Wf of welding wire W1 can be changed to the negative side from first feeding speed Wf1 by performing the feeding speed change control of changing feeding speed of welding wire W1 from first feeding speed Wf1 (feeding speed with a positive value in the forward feeding direction) to second feeding speed Wf2 (feeding speed on the negative side from first feeding speed Wf1).

Specifically, when second feeding speed Wf2 has a positive value (a positive value smaller than first feeding speed Wf1), welding wire W1 to be fed toward base material B1 can be decelerated. That is, the feeding speed of welding wire W1 to be fed toward base material B1 can be reduced less than first feeding speed Wf1. When second feeding speed Wf2 is zero, the feeding of welding wire W1 can be stopped. When second feeding speed Wf2 has a negative value, welding wire W1 can be fed in the reverse feeding direction away from base material B1.

As described above, when feeding speed Wf of welding wire W1 is changed to the negative side from first feeding speed Wf1, a distance between welding wire W1 and base material B1 can be increased, and thus enabling the opening of the short-circuit between welding wire W1 and base material B1 to be promoted. This enables shortening time (short-circuit time) from the start of the short-circuit to the opening of the short-circuit, so that a cycle of welding current "iw" (a period from a start point of a peak current to an end point of a base current following the peak current) is likely to be maintained constant. Thus, instability of the cycle of welding current "iw" caused by the short-circuit between welding wire W1 and base material B1 can be prevented.

When second feeding speed Wf2 is set to a negative value and feeding speed Wf of welding wire W1 is changed from first feeding speed Wf1 (feeding speed with a positive value in the forward feeding direction) to second feeding speed Wf2 (feeding speed with a negative value in the reverse feeding direction), welding wire W1 can be fed in a direction in which welding wire W1 is away from base material B1. This enables welding wire W1 to be reliably separated from base material B1, so that buckling of welding wire W1 (particularly, welding wire W1 made of aluminum) due to contact between welding wire W1 and base material B1 can be prevented from occurring.

When the feeding speed change control is performed after the current increase control is started (i.e., after the short-circuit standby time elapses from the time point at which the short-circuit between welding wire W1 and base material B 1 is detected), performance of the feeding speed change control can be eliminated when a contact state of the short-circuit between welding wire W1 and base material B1 is relatively mild and the short-circuit time, which is the time from the start of the short-circuit to the opening of the short-circuit, is relatively short (e.g., immediately after the start of the short-circuit). This enables the feeding speed change control to be effectively performed.

Specifically, when the short-circuit time, which is the time from the start of the short-circuit to the opening of the short-circuit, is shorter than the short-circuit standby time and the feeding speed change control is not performed, shortage of a target amount of feeding of welding wire W1 due to performance of the feeding speed change control can be prevented. When the short-circuit time, which is the time from the start of the short-circuit to the opening of the short-circuit, is longer than the short-circuit standby time and the feeding speed change control is performed, the opening of the short-circuit between welding wire W1 and base material B1 can be promoted.

The short-circuit time is desirably as short as possible. The reason for this is as follows. For example, a long arc length at high welding speed tends to cause an undercut. Thus, when voltage is lowered to shorten an arc length and cause a light short-circuit, an effect of preventing an undercut can be expected. However, when the short-circuit time increases, a cycle of a current waveform becomes irregular to cause welding to be unstable. Thus, when a short-circuit is generated, the short-circuit time is preferably short.

When timing of the short-circuit opening is before the elapse of the short-circuit standby time and the short-circuit opening can be performed only by supplying a welding current, the feeding speed change control is not performed. The reason is that when unnecessary feeding speed change control is performed, the target amount of feeding of welding wire W1 decreases. Thus, no feeding speed change control is preferably performed when the short-circuit is opened before the elapse of the short-circuit standby time, and the feeding speed change control is preferably performed when the short-circuit is not opened before the elapse of the short-circuit standby time.

When the feeding speed return control of returning feeding speed Wf of welding wire W1 from second feeding speed Wf2 to first feeding speed Wf1 is performed after the opening of the short-circuit between welding wire W1 and base material B1 is detected, feeding speed Wf of welding wire W1 can be returned to original speed. This enables preventing insufficient feeding of welding wire W1 due to a decrease in feeding speed Wf of welding wire W1.

### (First modification of exemplary embodiment)

Arc welding device 10 of a first modification of the exemplary embodiment is different from arc welding device 10 of the exemplary embodiment in details of the current increase control. Other configurations and operations of arc welding device 10 of the first modification of the exemplary embodiment are similar to those of arc welding device 10 of the exemplary embodiment.

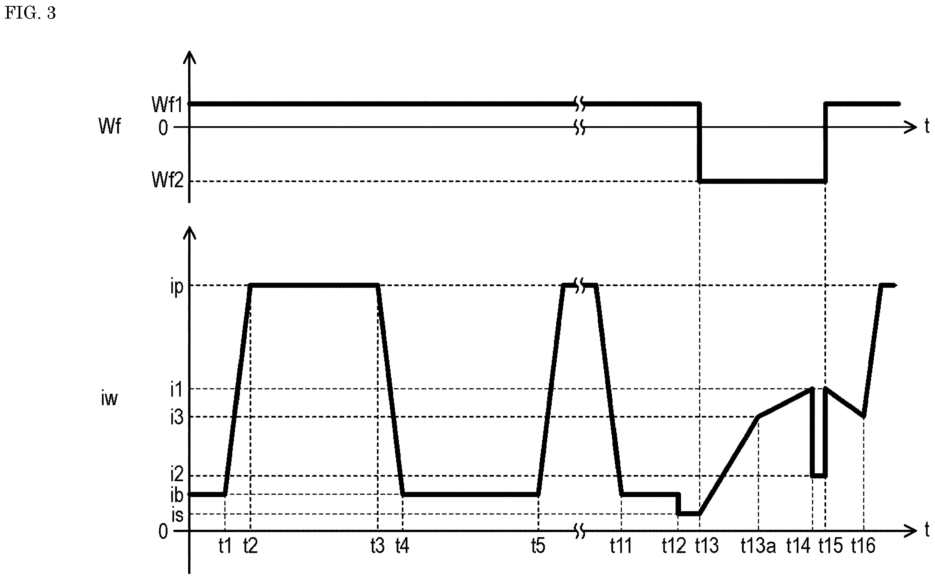

In the first modification of the exemplary embodiment, as illustrated in FIG. 3, the current increase control includes first current increase control and second current increase control to be performed after the first current increase control. In the example of FIG. 3, the first current increase control is continued during a period from time point t13 to time point t13a, and the second current increase control is continued during a period from time point t13a to time point t14. Control in other periods in the example of FIG. 3 is similar to the control illustrated in FIG. 2.

### [First current increase control (first step of increasing current)]

Controller 14 performs the first current increase control after (immediately after in this example) a predetermined short-circuit standby time elapses from a time point at which a short-circuit between welding wire W1 and base material B 1 is detected in normal current control (i.e., a time point at which short-circuit initial control is started). In the first current increase control, controller 14 controls welding current "iw" by controlling operation of power converter 11 (specifically, switching operation of first switching unit 102) such that welding current "iw" increases at a predetermined first rate of current increase. In the first current increase control, second switching unit 105 is continuously maintained in a conductive state.

In the example of FIG. 3, the first current increase control is continued in the period from time point t13 to time point t13a, and welding current "iw" gradually increases from short-circuit initial current "is" at the first rate of current increase.

### [Second current increase control (second step of increasing current)]

After the first current increase control, controller 14 performs the second current increase control. Specifically, controller 14 performs the second current increase control after welding current "iw" reaches a predetermined switching current in the first current increase control (immediately after welding current "iw" reaches third current "i3" in the example of FIG. 3). For example, controller 14 may start the second current increase control when detecting welding current "iw" that reaches the switching current. In the second current increase control, controller 14 controls welding current "iw" by controlling operation of power converter 11 (specifically, switching operation of first switching unit 102) such that welding current "iw" increases at a predetermined second rate of current increase, being lower than the first rate of current increase. In the second current increase control, second switching unit 105 is continuously maintained in the conductive state.

In the example of FIG. 3, the second current increase control is continued during the period from time point t13a to time point t14, and welding current "iw" gradually increases from third current "i3" at the second rate of current increase.

### [Feeding speed change control]

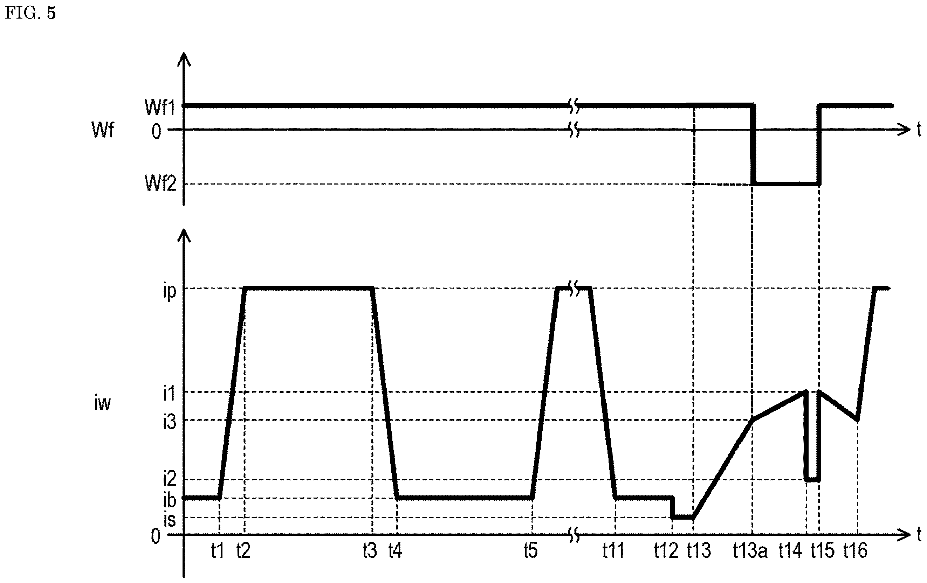

As illustrated in FIG. 5, the feeding speed change control may be performed after (immediately after in this example) the second current increase control is started. That is, controller 14 may control the operation of wire feeder 21 such that wire feeding speed Wf changes from first feeding speed Wf1 to second feeding speed Wf2 after the start of the second current increase control. For example, controller 14 may perform the feeding speed change control when welding current "iw" reaches the switching current.

### [Effects of first modification of exemplary embodiment]

As described above, when the feeding speed change control is performed after the first current increase control has been started (after the short-circuit standby time elapses from a time point at which the short-circuit between welding wire W1 and base material B 1 is detected), performance of the feeding speed change control can be eliminated when a contact state of the short-circuit between welding wire W1 and base material B1 is relatively mild and time (short-circuit time) from a start of the short-circuit to opening of the short-circuit is relatively short. This enables the feeding speed change control to be effectively performed.

### (Second modification of exemplary embodiment)

Arc welding device 10 of a second modification of the exemplary embodiment is different from arc welding device 10 of the exemplary embodiment in timing of feeding speed change control. Other configurations and operations of arc welding device 10 of the second modification of the exemplary embodiment are similar to those of arc welding device 10 of the exemplary embodiment.

In the second modification of the exemplary embodiment, the feeding speed change control is performed after (e.g., immediately after) current reduction control is started. That is, controller 14 controls operation of wire feeder 21 such that wire feeding speed Wf changes from first feeding speed Wf1 to second feeding speed Wf2 after the current reduction control is started. For example, controller 14 may perform the feeding speed change control upon detection of a constriction.

### [Effects of second modification of exemplary embodiment]

As described above, when the feeding speed change control is performed after the current reduction control has been started (after short-circuit standby time elapses from a time point at which a short-circuit between welding wire W1 and base material B1 is detected), performance of the feeding speed change control can be eliminated when a contact state of the short-circuit between welding wire W1 and base material B1 is relatively mild and time (short-circuit time) from a start of the short-circuit to opening of the short-circuit is relatively short. This enables the feeding speed change control to be effectively performed.

### (Third modification of exemplary embodiment)

Arc welding device 10 of a third modification of the exemplary embodiment is different from arc welding device 10 of the exemplary embodiment in operation of controller 14. Other configurations and operations of arc welding device 10 of the third modification of the exemplary embodiment are similar to those of arc welding device 10 of the exemplary embodiment.

### [Operation of integrating power (step of integrating power)]

In the third modification of the exemplary embodiment, controller 14 performs operation of integrating power instead of operation of detecting a constriction. In the operation of integrating power, controller 14 derives an integrated power value obtained by integrating power supplied to welding wire W1 and base material B1 from a time point at which a short-circuit between welding wire W1 and base material B1 is detected. Power to be supplied to welding wire W1 and base material B1 can be calculated based on the product of welding current "iw" and welding voltage Vw.

### [Current reduction control (step of reducing current)]

In the third modification of the exemplary embodiment, controller 14 performs current reduction control based on the integrated power value derived by the operation of integrating power instead of a constriction of a droplet detected by the operation of detecting a constriction. Specifically, controller 14 starts current increase control, and then starts the operation of integrating power. Controller 14 determines whether the integrated power value is larger than a predetermined integrated power threshold. Controller 14 starts the current reduction control after (e.g., immediately after) the integrated power value reaches the integrated power threshold. The integrated power threshold is set to an integrated power value that can be considered as a value immediately before the short-circuit between welding wire W1 and base material B1 is opened. The integrated power threshold may be a fixed value.

### [Feeding speed change control]

In the third modification of the exemplary embodiment, the feeding speed change control is performed after (e.g., immediately after) the current increase control is started after elapse of short-circuit standby time. That is, controller 14 controls operation of wire feeder 21 such that wire feeding speed Wf changes from first feeding speed Wf1 to second feeding speed Wf2 after the current increase control is started.

### [Effects of third modification of exemplary embodiment]

As described above, when the current reduction control is performed based on the integrated power value obtained by integrating power supplied to welding wire W1 and base material B1 from a time point at which the short-circuit between welding wire W1 and base material B 1 is detected, the current reduction control can be more accurately performed immediately before opening of the short-circuit between welding wire W1 and base material B1 as compared with when the current reduction control is performed based on whether there is a constriction in a droplet formed between welding wire W1 and base material B1.

Specifically, for example, when welding is performed on common base material B 1 or base material B 1 on a common jig, which is electrically connected, using a plurality of arc welding devices 10, disturbance such as noise may occur due to influence of another welding. When welding wire W1 is made of a material having a low resistance value and containing aluminum or copper, voltage change may decrease. Such a case causes accurate detection of voltage to be difficult, so that a constriction is less likely to be accurately detected. In contrast, when the current reduction control is performed based on an integrated power value, the current reduction control can be accurately performed immediately before the opening of the short-circuit between welding wire W1 and base material B1 even in the above case.

When the feeding speed change control is performed after the current increase control has been started (i.e., after the short-circuit standby time elapses from the time point at which the short-circuit between welding wire W1 and base material B1 is detected), performance of the feeding speed change control can be eliminated when a contact state of the short-circuit between welding wire W1 and base material B1 is relatively mild and time (short-circuit time) from a start of the short-circuit to opening of the short-circuit is relatively short. This enables the feeding speed change control to be effectively performed.

### (Fourth modification of exemplary embodiment)

Arc welding device 10 of a fourth modification of the exemplary embodiment is different from arc welding device 10 of the exemplary embodiment in timing of feeding speed change control. Other configurations and operations of arc welding device 10 of the fourth modification of the exemplary embodiment are similar to those of arc welding device 10 of the exemplary embodiment.

In the fourth modification of the exemplary embodiment, the feeding speed change control is performed after a predetermined short-circuit standby time elapses from a time point at which a short-circuit between welding wire W1 and base material B1 is detected. That is, controller 14 controls operation of wire feeder 21 such that wire feeding speed Wf changes from first feeding speed Wf1 to second feeding speed Wf2 after (e.g., immediately after) the short-circuit standby time elapses from the time point at which the short-circuit between welding wire W1 and base material B1 is detected. As described above, the feeding speed change control may be performed independently of types of control related to a welding current, such as the current increase control, the current reduction control, and the return control.

### [Effects of fourth modification of exemplary embodiment]

As described above, when the feeding speed change control is performed after the short-circuit standby time elapses from a time point at which the short-circuit between welding wire W1 and base material B1 is detected, performance of the feeding speed change control can be eliminated when a contact state of the short-circuit between welding wire W1 and base material B1 is relatively mild and time (short-circuit time) from a start of the short-circuit to opening of the short-circuit is relatively short. This enables the feeding speed change control to be effectively performed.

The short-circuit standby time may be set in accordance with characteristics (material, diameter, and the like) of welding wire W1, or may be set in accordance with a current range of welding current "iw". For example, the short-circuit standby time may be set to an optimum time for each material of welding wire W1, or may be set to an optimum time for each current range of welding current "iw". This kind of optimum time of the short-circuit standby time can be obtained by an experiment or the like.

### (Other exemplary embodiments)

In the above description, a gradient (rate of increase) of welding current "iw" in the current increase control may be set in accordance with the characteristics (material, diameter, and the like) of welding wire W1, the current range of welding current "iw", demand of a customer, and the like. For example, when reduction of spatters is more strongly required than welding stability, the gradient of welding current "iw" in the current increase control is preferably reduced. For example, when welding current "iw" in the current increase control has a normal gradient of "100 A/ms" and the reduction of spatters is more strongly required than the welding stability, the gradient of welding current "iw" in the current increase control may be set to a gradient (e.g., 10 A/ms) smaller than the normal gradient, or the gradient of welding current "iw" in the current increase control may be set to zero to eliminate the current increase control. However, such a case does not allow short-circuit opening due to Joule heating to be expected, so that second feeding speed Wf2 is preferably set to a negative value (reverse feeding) to promote the short-circuit opening. In particular, when the current increase control is eliminated, second feeding speed Wf2 preferably has magnitude (absolute value) that is 1.5 times or more as large as magnitude of first feeding speed Wf1 being a normal feeding speed.

In the above description, second feeding speed Wf2 may increase negatively as first feeding speed Wf1 increases positively.

When a short-circuit occurs between welding wire W1 and base material B1 as first feeding speed Wf1 increases positively, welding wire W1 and base material B1 are likely to come into close contact with each other. As second feeding speed Wf2 increases negatively, welding wire W1 is quickly separated from base material B1. Thus, when second feeding speed Wf2 is increased negatively as first feeding speed Wf1 increases positively, welding wire W1 can be effectively separated from base material B1 when the short-circuit between welding wire W1 and base material B1 occurs.

In the above description, second feeding speed Wf2 may be set in accordance with a kind of material constituting welding wire W1.

For example, when welding wire W1 is made of a material having a relatively low resistance value (hereinafter, referred to as a "low-resistance material") such as aluminum, an aluminum alloy, copper, or a copper alloy, welding wire W1 has a low resistance value, and thus welding wire W1 is less likely to generate Joule heat even when a welding current is applied to welding wire W1, and heat input is less likely to enter welding wire W1. Thus, even when the welding current is continuously applied to welding wire W1, a tip of welding wire W1 is less likely to be melted, and thus buckling due to contact between welding wire W1 and base material B1 is likely to occur in welding wire W1. Thus, when welding wire W1 is made of a low-resistance material, welding wire W1 is preferably fed in a reverse feeding direction away from base material B1 in the feeding speed change control by setting second feeding speed Wf2 to a negative value. This enables buckling of welding wire W1 to be prevented, and opening of the short-circuit between welding wire W1 and base material B1 to be promoted.

When welding wire W1 is made of a material having a relatively high resistance value (hereinafter referred to as a "high resistance material") such as mild steel or stainless steel, welding wire W1 has a relatively high resistance value, and thus welding wire W1 is likely to generate Joule heat when a welding current is applied to welding wire W1, and heat input is likely to enter welding wire W1. This causes the tip of welding wire W1 to be likely to be melted, so that buckling is less likely to occur in welding wire W1. Thus, when welding wire W1 is made of a high resistance material, welding wire W1 fed toward base material B1 is preferably decelerated or stopped in the feeding speed change control by setting second feeding speed Wf2 to a positive value (a positive value smaller than first feeding speed Wf1) or zero. This enables the opening of the short-circuit between welding wire W1 and base material B1 to be effectively promoted.

In the above description, the short-circuit standby time may be set in accordance with at least one of a kind of material constituting welding wire W1 and feeding speed Wf (specifically, first feeding speed Wf1) of welding wire W1.

For example, the short-circuit standby time when welding wire W1 is made of a high-resistance material may be increased to more than the short-circuit standby time when welding wire W1 is made of a low-resistance material. Specifically, when welding wire W1 is made of a low-resistance material, the short-circuit standby time is preferably set to 100 psec or more and 1000 psec or less. When welding wire W1 is made of a high resistance material, the short-circuit standby time is preferably set to 100 psec or more and 3000 psec or less, and particularly preferably set to 2000 psec or more and 3000 psec or less in consideration of spatter reduction. When the short-circuit standby time is increased, preheating time for welding wire W1 increases, and thus a short-circuit opening current (welding current "iw" at the time of opening a short-circuit ) can be reduced. For example, when the short-circuit standby time is changed from 100 psec to 2000 psec, the short-circuit opening current decreases from 300 A to 200 A. When the short-circuit opening current is reduced as described above, spatters can be reduced. When the short-circuit standby time is excessively increased, time from the start of the short-circuit to the opening of the short-circuit varies to cause welding to be unstable. Thus, the short-circuit standby time is preferably 3000 psec or less.

The short-circuit standby time may be shortened as feeding speed Wf (specifically, first feeding speed Wf1) of welding wire W1 increases. As feeding speed Wf of welding wire W1 increases, buckling of welding wire W1 due to contact between welding wire W1 and base material B1 is likely to occur. Thus, when the short-circuit standby time is shortened as feeding speed Wf of welding wire W1 increases, buckling of welding wire W1 can be prevented from occurring.

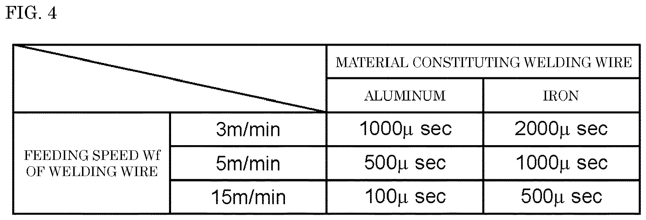

FIG. 4 illustrates short-circuit standby time in accordance with a kind of material constituting welding wire W1 and feeding speed Wf of welding wire W1. In the example of FIG. 4, when the material constituting welding wire W1 is "aluminum" and feeding speed Wf of welding wire W1 is "3 m/min", the short-circuit standby time is set to "1000 psec".

Although the feeding speed change control performed after predetermined time (e.g., the short-circuit standby time) elapses from a time point at which the short-circuit between welding wire W1 and base material B1 is detected is described above as an example, the feeding speed change control may be performed immediately after the short-circuit between welding wire W1 and base material B 1 is detected. It is needless to say that the feeding speed change control is performed (started) before the short-circuit between welding wire W1 and base material B1 is opened. The feed control return control is preferably started at a time point at which opening of the short-circuit between welding wire W1 and base material B 1 is detected, immediately after the time point at which the opening of the short-circuit is detected, or near after the time point at which the opening of the short-circuit is detected.

The exemplary embodiments described above may be appropriately combined to be practiced. The exemplary embodiments described above are each an intrinsically preferable example, and are not intended to limit the technique disclosed herein, its application, or a range of its use.

### INDUSTRIAL APPLICABILITY

As described above, the technique disclosed herein is useful as an arc welding technique.

### REFERENCE MARKS IN THE DRAWINGS

1: arc welding system
W1: wire
B1: base material
S1: power source
10: arc welding device
11: power converter
12: welding current detector
13: welding voltage detector
14: controller
21: wire feeder
22: welding torch
30: setting unit
iw: welding current
Vw: welding voltage
Wf: feeding speed
Wf1: first feeding speed
Wf2: second feeding speed

## Claims

1. An arc welding method in which a welding wire serving as a consumable electrode is fed toward a base material, and a welding current in a pulse form alternately including a peak current and a base current smaller than the peak current is caused to flow through the welding wire and the base material to generate an arc between the welding wire and the base material to weld the base material, the arc welding method comprising the steps of:
a) detecting a short-circuit between the welding wire and the base material; and
b) changing a feeding speed of the welding wire from a first feeding speed to a second feeding speed on a negative side from the first feeding speed when a speed in a direction in which the welding wire is fed toward the base material is defined as positive after the short-circuit between the welding wire and the base material is detected in the step a),
c) increasing the welding current after a predetermined short-circuit standby time elapses from a time point at which the short-circuit between the welding wire and the base material is detected in the step a),
k) detecting opening of the short-circuit between the welding wire and the base material; and
1) returning the feeding speed of the welding wire from the second feeding speed to the first feeding speed after the opening of the short-circuit between the welding wire and the base material is detected in the step k),
wherein the step b) is performed after the step c) is started, the step c) includes the steps of:
d) increasing the welding current at a first rate of current increase, being predetermined, after the short-circuit standby time elapses from a time point when the short-circuit between the welding wire and the base material is detected in the step a); and
e) increasing the welding current at a second rate of current increase, being lower than the first rate of current increase, after the step d), and the step b) is performed after the step e).

2. The arc welding method according to claim 1, further comprising the steps of:
f) detecting a constriction having occurred in a droplet formed between the welding wire and the base material; and
g) reducing and controlling the welding current after the step c) is started and the constriction is then detected in the step f).

3. The arc welding method according to claim 1, further comprising the steps of:
h) detecting an integrated power value obtained by integrating power supplied to the welding wire and the base material from a time point at which the short-circuit between the welding wire and the base material is detected in the step a); and
i) reducing and controlling the welding current after the step c) is started and then the integrated power value derived in the step h) reaches a predetermined integrated power threshold.

4. The arc welding method according to claim 3, further comprising the step of:
j) determining whether the integrated power value is greater than the predetermined threshold, wherein the predetermined threshold is a fixed value.

5. The arc welding method according to claim 1, wherein the step b) is performed after a predetermined short-circuit standby time elapses from a time point at which the short-circuit between the welding wire and the base material is detected in the step a).

6. The arc welding method according to any one of claims 1 to 5,
wherein the second feeding speed increases negatively as the first feeding speed increases positively.

## Patentansprüche

1. Lichtbogenschweißverfahren, in dem ein Schweißdraht, der als eine abschmelzbare Elektrode dient, hin zu einem Grundmaterial zugeführt wird und bewirkt wird, dass ein Schweißstrom in einer Impulsform, der abwechselnd einen Spitzenstrom und einen Basisstrom umfasst, der niedriger als der Spitzenstrom ist, durch den Schweißdraht und das Grundmaterial fließt, um einen Lichtbogen zwischen dem Schweißdraht und dem Grundmaterial zu erzeugen, um das Grundmaterial zu schweißen, wobei das Lichtbogenschweißverfahren die folgenden Schritte umfasst:
a) Erkennen eines Kurzschlusses zwischen dem Schweißdraht und dem Grundmaterial; und
b) Ändern einer Zufuhrgeschwindigkeit des Schweißdrahts von einer ersten Zufuhrgeschwindigkeit zu einer zweiten Zufuhrgeschwindigkeit auf einer negativen Seite von der ersten Zufuhrgeschwindigkeit, wenn eine Geschwindigkeit in einer Richtung, in welcher der Schweißdraht hin zu dem Grundmaterial zugeführt wird, als positiv definiert ist, nachdem im Schritt a) der Kurzschluss zwischen dem Schweißdraht und dem Grundmaterial erkannt wurde,
c) Erhöhen des Schweißstroms, nachdem eine vorbestimmten Kurzschluss-Standby-Zeit ab einem Zeitpunkt verstrichen ist, an dem der Kurzschluss zwischen dem Schweißdraht und dem Grundmaterial im Schritt a) erkannt wurde,
k) Erkennen der Öffnung des Kurzschlusses zwischen dem Schweißdraht und dem Grundmaterial; und
l) Rückführen der Zufuhrgeschwindigkeit des Schweißdrahts von der zweiten Zufuhrgeschwindigkeit zur ersten Zufuhrgeschwindigkeit, nachdem die Öffnung des Kurzschlusses zwischen dem Schweißdraht und dem Grundmaterial im Schritt k) erkannt wurde,
wobei der Schritt b) durchgeführt wird, nachdem der Schritt c) begonnen wurde, der Schritt c) die folgenden Schritte umfasst:
d) Erhöhen des Schweißstroms mit einer ersten Stromerhöhungsgeschwindigkeit, die vorbestimmt ist, nachdem die Kurzschluss-Standby-Zeit ab einem Zeitpunkt verstrichen ist, an dem der Kurzschluss zwischen dem Schweißdraht und dem Grundmaterial im Schritt a) erkannt wurde; und
e) Erhöhen des Schweißstroms mit einer zweiten Stromerhöhungsgeschwindigkeit, die niedriger als die erste Stromerhöhungsgeschwindigkeit ist, nach dem Schritt d), und der Schritt b) nach dem Schritt e) durchgeführt wird.

2. Lichtbogenschweißverfahren nach Anspruch 1, das ferner die folgenden Schritte umfasst:
f) Erkennen, dass eine Einschnürung in einem Tröpfchen aufgetreten ist, das zwischen dem Schweißdraht und dem Grundmaterial gebildet wird; und
g) Vermindern und Steuern des Schweißstroms, nachdem der Schritt c) begonnen wurde und die Einschnürung dann im Schritt f) erkannt wurde.

3. Lichtbogenschweißverfahren nach Anspruch 1, das ferner die folgenden Schritte umfasst:
h) Erkennen eines integrierten Leistungswerts, der durch Integrieren von Leistung erhalten wird, mit dem der Schweißdraht und das Grundmaterial versorgt werden, ab einem Zeitpunkt, an dem der Kurzschluss zwischen dem Schweißdraht und dem Grundmaterial im Schritt a) erkannt wird; und
i) Vermindern und Steuern des Schweißstroms, nachdem der Schritt c) begonnen wurde und dann der im Schritt h) abgeleitete integrierte Leistungswert einen vorbestimmten integrierten Leistungsschwellenwert erreicht wurde.

4. Lichtbogenschweißverfahren nach Anspruch 3, das ferner den folgenden Schritt umfasst:
j) Bestimmen, ob der integrierte Leistungswert höher als der vorbestimmte Schwellenwert ist, wobei der vorbestimmte Schwellenwert ein fester Wert ist.

5. Lichtbogenschweißverfahren nach Anspruch 1, wobei der Schritt b) durchgeführt wird, nachdem eine vorbestimmte Kurzschluss-Standby-Zeit ab einem Zeitpunkt verstrichen ist, an dem der Kurzschluss zwischen dem Schweißdraht und dem Grundmaterial im Schritt a) erkannt wurde.

6. Lichtbogenschweißverfahren nach einem der Ansprüche 1 bis 5,
wobei die zweite Zufuhrgeschwindigkeit negativ zunimmt, während die erste Zufuhrgeschwindigkeit positiv zunimmt.

## Revendications

1. Procédé de soudage à l'arc dans lequel un fil de soudage servant d'électrode consommable est acheminé vers un matériau de base, et un courant de soudage sous forme d'impulsion comportant alternativement un courant de crête et un courant de base inférieur au courant de crête est amené à circuler à travers le fil de soudage et le matériau de base pour générer un arc entre le fil de soudage et le matériau de base afin de souder le matériau de base, le procédé de soudage à l'arc comprenant les étapes suivantes :
a) détecter un court-circuit entre le fil de soudage et le matériau de base ; et
b) faire passer une vitesse d'alimentation en fil de soudage d'une première vitesse d'alimentation à une deuxième vitesse d'alimentation sur un côté négatif de la première vitesse d'alimentation lorsqu'une vitesse dans une direction dans laquelle le fil de soudage est acheminé vers le matériau de base est définie comme positive après que le court-circuit entre le fil de soudage et le matériau de base a été détecté à l'étape a),
c) augmenter le courant de soudage après l'écoulement d'un temps d'attente de court-circuit prédéterminé à partir d'un moment où le court-circuit entre le fil de soudage et le matériau de base a été détecté à l'étape a),
k) détecter l'ouverture du court-circuit entre le fil de soudage et le matériau de base ; et
l) ramener la vitesse d'alimentation en fil de soudage de la deuxième vitesse d'alimentation à la première vitesse d'alimentation après que l'ouverture du court-circuit entre le fil de soudage et le matériau de base a été détectée à l'étape k),
dans lequel
l'étape b) est réalisée après que l'étape c) a commencé, l'étape c) comporte les étapes suivantes :
d) augmenter le courant de soudage à un premier taux d'augmentation de courant qui est prédéterminé après l'écoulement du temps d'attente de court-circuit à partir d'un moment où le court-circuit entre le fil de soudage et le matériau de base a été détecté à l'étape a) ; et
e) augmenter le courant de soudage à un deuxième taux d'augmentation de courant qui est inférieur au premier taux d'augmentation de courant, après l'étape d), et
l'étape b) est réalisée après l'étape e).

2. Procédé de soudage à l'arc selon la revendication 1, comprenant en outre les étapes suivantes :
f) détecter une constriction qui s'est produite dans une gouttelette formée entre le fil de soudage et le matériau de base ; et
g) réduire et commander le courant de soudage après que l'étape c) a commencé, et la constriction est alors détectée à l'étape f).

3. Procédé de soudage à l'arc selon la revendication 1, comprenant en outre les étapes suivantes :
h) détecter une valeur de puissance intégrée obtenue en intégrant une puissance fournie au fil de soudage et au matériau de base à partir d'un moment où le court-circuit entre le fil de soudage et le matériau de base a été détecté à l'étape a) ; et
i) réduire et commander le courant de soudage après que l'étape c) a commencé, et la valeur de puissance intégrée dérivée à l'étape h) atteint ensuite un seuil de puissance intégrée prédéterminé.

4. Procédé de soudage à l'arc selon la revendication 3, comprenant en outre l'étape suivante :
j) déterminer si la valeur de puissance intégrée est supérieure au seuil prédéterminé, dans lequel le seuil prédéterminé est une valeur fixée.

5. Procédé de soudage à l'arc selon la revendication 1, dans lequel l'étape b) est réalisée après l'écoulement d'un temps d'attente de court-circuit prédéterminé à partir d'un moment où le court-circuit entre le fil de soudage et le matériau de base a été détecté à l'étape a).

6. Procédé de soudage à l'arc selon l'une des revendications 1 à 5,
dans lequel la deuxième vitesse d'alimentation augmente négativement à mesure que la première vitesse d'alimentation augmente positivement.
